# EUROPÄISCHE PATENTSCHRIFT

(11) **EP 3 056 635 B1**
(45) Veröffentlichungstag und Bekanntmachung des Hinweises auf die Patenterteilung: **17.05.2017**
(21) Anmeldenummer: 15000401.8
(22) Anmeldetag: 11.02.2015
(51) Int. Cl.: E04H 12/04, F16B 5/00

(54) **Turm für eine Windkraftanlage und Verfahren zu dessen Herstellung**
Tower for a wind power assembly and method for producing the same
Tour d'éolienne et son procédé de fabrication

(43) Veröffentlichungstag der Anmeldung: 17.08.2016
(73) Patentinhaber: MERK Timber GmbH, 86551 Aichach (DE)
(72) Erfinder: Bedö, Stefan, Dr., 86668 Karlshuld (DE); Wiedmayer, Bernd, 86316 Friedberg (DE); Kreutmayr, Roman, 86316 Friedberg (DE); Hölzl, Franz, 86672 Thierhaupten (DE); Kunz, Fritz, 86573 Obergriesbach (DE)
(74) Vertreter: Reinhardt, Annette

(56) Entgegenhaltungen:
- EP-A1- 0 096 121
- AT-U1- 12 951
- DE-A1-102007 006 652
- DE-A1-102012 106 321
- DE-C- 621 482
- US-A- 2 003 738
- US-A- 4 840 440

## Beschreibung

Die Erfindung betrifft einen Turm für eine Windkraftanlage der im Oberbegriff des Anspruchs 1 angegebenen Gattung sowie ein Verfahren zur Herstellung eines Turms für eine Windkraftanlage.

Aus der DE 10 2007 006 652 A1 ist ein Turm für eine Windkraftanlage bekannt, der aus Holz aufgebaut ist. Der Turm besitzt einen viereckigen Querschnitt und ist aus übereinander angeordneten Segmenten aufgebaut. Die Segmente sind jeweils aus einzelnen Holzplatten aufgebaut.

Aus der EP 0 096 121 A1 ist ein ähnlicher Turm bekannt.

Der Erfindung liegt die Aufgabe zugrunde, einen Turm für eine Windkraftanlage zu schaffen, der einfach und mit hoher Genauigkeit herstellbar ist. Eine weitere Aufgabe der Erfindung besteht darin, ein Verfahren zur Herstellung eines Turms für eine Windkraftanlage anzugeben.

Diese Aufgabe wird bezüglich des Turms durch einen Turm für eine Windkraftanlage mit den Merkmalen des Anspruchs 1 gelöst. Bezüglich des Verfahrens wird die Aufgabe durch ein Verfahren mit den Merkmalen des Anspruchs 12 gelöst.

Es ist vorgesehen, dass die Holzplatten an ihren Stoßkanten über zwischen den Holzplatten angeordnete, vertikal verlaufende Keile verbunden sind. Über die Keile kann auf einfache Weise ein Toleranzausgleich erfolgen. Das Segment des Turms kann dadurch einfach und mit hoher Genauigkeit hergestellt werden. Holzplatten zur Herstellung eines Turms für eine Windkraftanlage besitzen üblicherweise Kantenlängen von mehreren Metern und ein entsprechend großes Gewicht. Über die Keile können die Holzplatten einfach und mit hoher Genauigkeit justiert und miteinander verbunden werden.

Vorteilhaft ist der Keil an der Stoßkante mit beiden angrenzenden Holzplatten verklebt. Dadurch wird eine einfache Verbindung der Holzplatten miteinander und mit dem Keil erzielt, die eine hohe Festigkeit aufweist.

Vorteilhaft verbreitert sich der Keil in einem horizontalen Querschnitt zur Innenseite des Segments hin. Bei der Herstellung des Turms kann der Keil dadurch von der Turminnenseite nach außen bewegt werden, bis das gewünschte Außenmaß des Turms erreicht ist. Der Keil kann dadurch von der Turmaußenseite aus unsichtbar sein und unterbricht die Außenkontur nicht. Dadurch ergeben sich durch den Keil auch keine zusätzlichen, abzudichtenden Bauteilstöße. Der Winkel zwischen den Längsseiten des Keils, die an den angrenzenden horizontalen Holzplatten anliegen, beträgt dabei vorteilhaft von 10° bis 30°. Insbesondere beträgt der Winkel zwischen den Längsseiten des Keils von 15° bis 25°. Dadurch, dass der Keil vergleichsweise spitz ausgebildet ist, kann über entsprechende Einstellung der Einschubtiefe des Keils eine genaue Einstellung der Außenabmessungen des Segments erfolgen. Gleichzeitig ist die maximal ausgleichbare Toleranz ausreichend groß.

Vorteilhaft ist der Keil über mindestens eine Schraube mit mindestens einer an den Keil angrenzenden Holzplatte verbunden. Die Schraube dient zur Vorfixierung des Keils während der Aushärtung des Klebers. Über die Schraube kann der benötigte Pressdruck für die Klebverbindung aufgebracht werden. Gleichzeitig werden Keil und Holzplatten während der Aushärtezeit des Klebers über die Schraube aneinander fixiert, so dass keine Relativbewegungen der Holzplatten zueinander und zum Keil möglich sind. Die Schraube bietet eine zusätzliche Querzugsicherung für die Klebverbindung. Die Schraube erstreckt sich dabei vorteilhaft von der Innenseite des Segments in den Keil und in die Holzplatte. Die Schrauböffnung ist aufgrund der Anordnung an der Innenseite des Segments dadurch vor Feuchtigkeit und Witterungseinflüssen geschützt. Eine zusätzliche Abdichtung kann entfallen. Gleichzeitig ist die Verschraubung von der Außenseite des Turms nicht sichtbar.

Durch das Einschrauben der Schraube von der Innenseite des Segments wird eine gute Zugänglichkeit der Schraube bei der Montage, insbesondere über ein im Inneren des Segments angeordnetes Gerüst, erreicht.

Die Längsachse der Schraube verläuft zur Innenseite der Holzplatte, in die die Schraube eingeschraubt ist, vorteilhaft in einem Winkel, der von 40° bis 140° beträgt. Der Winkel beträgt insbesondere von 60° bis 130°, vorteilhaft von 100° bis 120°. Über die Schraube kann die Holzplatte gegen den Keil gezogen und dadurch eine geringe Fugenbreite zwischen Keil und Holzplatte sichergestellt werden. Dadurch, dass die Schraubenlängsachse steil zur Innenseite der Holzplatte ausgerichtet ist, können ausreichend große Zugkräfte auf die Holzplatte aufgebracht werden. Eine Fixierung der Holzplatten zueinander von der Turmaußenseite kann entfallen.

Die Schraube verläuft vorteilhaft durch eine ins Turminnere ragende Längsseite des Keils, die mit der Längsachse der Schraube einen Winkel von 85° bis 95° einschließt. Bevorzugt verläuft die Längsseite des Keils etwa senkrecht zur Längsachse der Schraube. Zur außenliegenden Seite der Stoßkante besitzt der Keil vorteilhaft einen Abstand. Dadurch ist der Keil von der Turmaußenseite nicht sichtbar, so dass sich ein ansprechendes Äußeres ergibt. Auch beim Ausgleich großer Toleranzen ragt der Keil nicht bis auf die Turmaußenseite, was eine Nachbearbeitung des Keils an der Turmaußenseite bedingen würde.

Die Holzplatten des Turms weisen an ihrer Außenseite vorteilhaft eine Beschichtung auf. Die Beschichtung verhindert das Eindringen von Feuchtigkeit in das Holz des Turms. Dadurch ergibt sich eine gute Dauerhaltbarkeit des Turms. Die Beschichtung ist insbesondere eine Folie. Die vertikal verlaufenden Stoßkanten zwischen den benachbarten Holzplatten sind vorteilhaft an der Turmaußenseite abgedichtet. Dadurch ist auch an den Stoßkanten das Eindringen von Feuchtigkeit und Wasser sicher vermieden.

Für ein Verfahren zur Herstellung eines Turms für eine Windkraftanlage ist vorgesehen, dass die Holzplatten mit einer Beschichtung versehen werden, dass die Holzplatten in einem späteren Verfahrensschritt zu ringförmigen Segmenten verbunden werden, wobei vertikal verlaufende Keile zwischen in Umfangsrichtung benachbarten Holzplatten angeordnet und mit den Holzplatten verklebt werden. Dadurch, dass die Holzplatten vor dem Verbinden der Einzelplatten zu ringförmigen Segmenten mit einer Beschichtung versehen werden, ist die Herstellung vereinfacht. Die Beschichtung kann bei am Boden angeordneter Holzplatte insbesondere maschinell bei der Herstellung der Holzplatte im Werk aufgebracht werden. Dadurch kann eine hohe Qualität der Beschichtung sichergestellt werden. Die Beschichtung wird vorteilhaft als Folie mit definiertem Pressdruck aufgeklebt. Bevorzugt wird die Beschichtung im Vakuumverfahren aufgeklebt. Die Keile werden vorteilhaft über Schrauben an den benachbarten Holzplatten befestigt. Dadurch können die benachbarten Holzplatten vorfixiert werden. Gleichzeitig kann beim Verkleben ein gewünschter Pressdruck über die Schrauben aufrechterhalten und die Klebverbindung während des Aushärtens des Klebstoffs fixiert werden. Die Keile werden vorteilhaft über eine Schiebeklebung eingeklebt. Der Klebstoff wird dabei vorab auf die Keile aufgebracht und die Keile anschließend mit Schrauben an den benachbarten Holzplatten befestigt.

Die Länge der Keile ist vorteilhaft deutlich geringer als die Höhe des Segments. Die Keile werden vorteilhaft stirnseitig aneinander gelegt, insbesondere mit geringem Abstand zueinander. Dadurch ergibt sich eine einfache Herstellung, und es können große Toleranzen ausgeglichen werden. Die Keile können dabei an ihren Stirnseiten miteinander verbunden sein, insbesondere durch Kleben. Es kann auch vorgesehen sein, dass die Keile an ihren Stirnseiten eine Kontur, beispielsweise eine Abschrägung aufweisen und dass die Keile mit der Kontur ineinandergreifen.

Ausführungsbeispiele der Erfindung werden im Folgenden anhand der Zeichnung erläutert. Es zeigen:
- Fig. 1: eine schematische, perspektivische Darstellung einer Windkraftanlage,
- Fig. 2: einen Längsschnitt durch die Windkraftanlage aus Fig. 1,
- Fig. 3: den Fußbereich der Windkraftanlage aus Fig. 1 in vergrößerter Darstellung,
- Fig. 4: einen Schnitt entlang der Linie IV-IV in Fig. 3,
- Fig. 5: den Ausschnitt V aus Fig. 2 in vergrößerter Darstellung,
- Fig. 6: einen Schnitt entlang der Linie VI-VI in Fig. 5,
- Fig. 7: einen Schnitt entlang der Linie VII-VII in Fig. 5,
- Fig. 8: einen Schnitt entlang der Linie VIII-VIII in Fig. 7,
- Fig. 9: den Ausschnitt IX aus Fig. 8 in vergrößerter Darstellung,
- Fig. 10: einen Schnitt entlang der Linie X-X in Fig. 9,
- Fig. 11: einen Schnitt entlang der Linie XI-XI in Fig. 2,
- Fig. 12: den Ausschnitt XII aus Fig. 2 in vergrößerter Darstellung,
- Fig. 13: den Ausschnitt XIII aus Fig. 2 in vergrößerter Darstellung,
- Fig. 14: eine Seitenansicht des Stoßbereichs zwischen zwei Segmenten,
- Fig. 15: einen vergrößerten Ausschnitt aus Fig. 14,
- Fig. 16 und 17: ausschnittsweise perspektivische Darstellungen des Stoßbereichs an einer vertikalen Stoßkante des Turms,
- Fig. 18: einen Schnitt entlang der Linie XVIII-XVIII in Fig. 15,
- Fig. 19: den Ausschnitt XIX aus Fig. 2 in vergrößerter Darstellung,
- Fig. 20: eine Schnittdarstellung des Stoßbereichs mit einer Lagesicherung für die Herstellung,
- Fig. 21: eine vergrößerte Schnittdarstellung der vertikalen Stoßkante,
- Fig. 22: eine perspektivische Darstellung des Bereichs einer vertikalen Stoßkante von der Turminnenseite,
- Fig. 23: eine Seitenansicht eines Keils,
- Fig. 24: einen Schnitt durch einen Keil,
- Fig. 25: eine perspektivische Explosionsdarstellung des Turmkopfs,
- Fig. 26: einen Schnitt durch den Turmkopf aus Fig. 25,
- Fig. 27: den Ausschnitt XXVII aus Fig. 26 in vergrößerter Darstellung,
- Fig. 28: eine ausschnittsweise Ansicht auf den unteren Anschlussflansch des Turmkopfs,
- Fig. 29: einen Schnitt durch den Anschlussbereich des oberen Segments mit dem Turmkopf,
- Fig. 30: einen Schnitt entlang der Linie XXX-XXX in Fig. 29,
- Fig. 31: eine Seitenansicht in Richtung des Pfeils XXXI aus Fig. 30,
- Fig. 32: eine Seitenansicht in Richtung des Pfeils XXXI auf ein Ausführungsbeispiel,
- Fig. 33: eine vergrößerte Darstellung des Ausschnitts XXXIII aus Fig. 26,
- Fig. 34: eine Seitenansicht des Turmkopfs,
- Fig. 35: eine Draufsicht auf den Turmkopf in Richtung des Pfeils XXXV in Fig. 34,
- Fig. 36: eine vergrößerte Darstellung des Bereichs XXXVI aus Fig. 34,
- Fig. 37: eine Schnittdarstellung durch ein Ausführungsbeispiel eines Stoßbereichs.

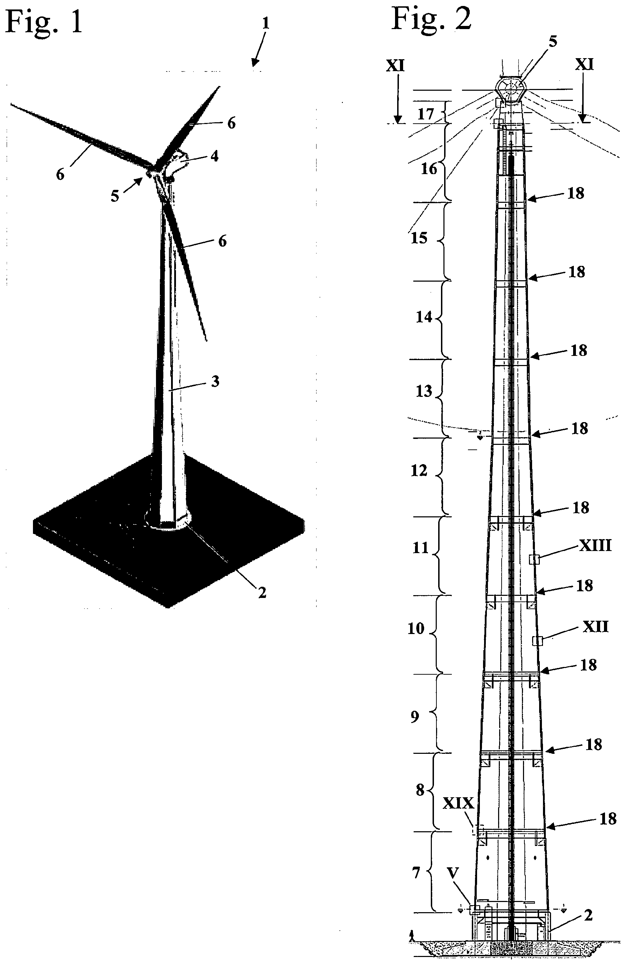

Fig. 1 zeigt eine Windkraftanlage 1. Die Windkraftanlage 1 besitzt einen Turm 3, der auf einem Sockel 2 angeordnet ist. Im Ausführungsbeispiel ist der Sockel 2 ein Fundament. Der Sockel 2 kann jedoch auch ein Betonturm sein. An der Oberseite des Turms 3 ist eine Gondel 4 festgelegt, an der ein Rotor 5 um eine Drehachse drehbar gelagert ist. Die Drehachse des Rotors 5 ist im Ausführungsbeispiel horizontal ausgerichtet. Auch eine leicht geneigte Drehachse des Rotors 5 kann jedoch vorteilhaft sein. Der Rotor 5 umfasst im Ausführungsbeispiel drei Rotorblätter 6. Auch eine andere Anzahl von Rotorblättern 6 kann vorgesehen sein. Der Turm 3 ist aus Holz aufgebaut.

Wie Fig. 2 zeigt, ist der Turm 3 aus übereinander angeordneten, ringförmigen Segmenten 7 bis 16 aufgebaut. Der Außendurchmesser des Turms 3 verringert sich dabei mit zunehmender Höhe kontinuierlich. Die Segmente 7 bis 16 besitzen eine kegelstumpfförmige Gestalt. Auf dem obersten Segment 16 ist ein Turmkopf 17 angeordnet, der die Gondel 4 mit dem Rotor 5 trägt. Übereinander liegende Segmente 7 bis 16 sind jeweils an einem horizontal verlaufenden Stoßbereich 18 miteinander verbunden.

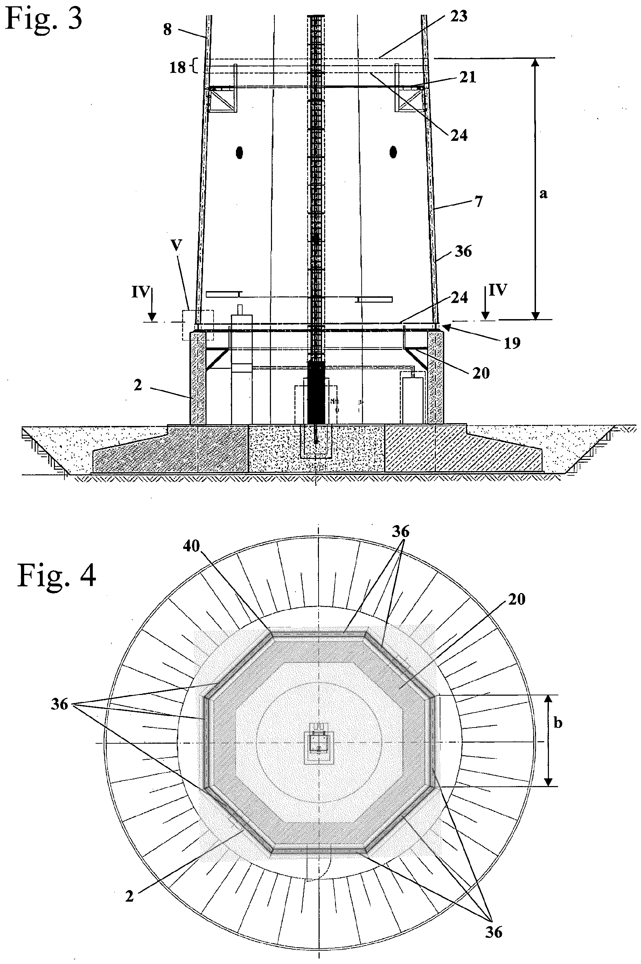

Fig. 3 zeigt die Anordnung des ersten, untersten Segments 7 auf dem Sockel 2. Auf dem Sockel 2 ist ein Anschlusselement 19 festgelegt, auf dem das erste Segment 7 fixiert ist. Zwischen dem Anschlusselement 19 und dem Sockel 2 kann eine Anordnung zum Ausrichten des Anschlusselements 19, beispielsweise eine Stahlplatte, vorgesehen sein. Das erste Segment 7 ist, wie auch die Schnittdarstellung in Fig. 4 zeigt, aus insgesamt acht Holzplatten 36 aufgebaut, die an etwa vertikal verlaufenden Stoßkanten 40 miteinander verbunden sind. Aufgrund der Verringerung des Außendurchmessers des Turms 3 verlaufen die Stoßkanten 40 geringfügig zur Turminnenseite hin geneigt. Die Holzplatten 36 bilden einen mehreckigen, im Ausführungsbeispiel einen achteckigen Ring. Die Holzplatten 36 besitzen eine horizontal gemessene Breite b, die mit zunehmender Höhe stetig abnimmt. Die Breite b der Holzplatten 36 des ersten Segments 7 kann mehrere Meter, beispielsweise 2 m bis 5 m betragen. Im Ausführungsbeispiel ist für die Holzplatten 36 des ersten Segments 7 eine Breite b zwischen 4,5 m und 5 m vorgesehen. Die Holzplatten 36 sind dabei trapezförmig ausgebildet.

Die Segmente 7 bis 16 besitzen jeweils eine von ihrer unteren Stirnseite 24 zu ihrer oberen Stirnseite 23 gemessene Höhe a, die vorteilhaft mehrere Meter beträgt. Im Ausführungsbeispiel ist eine Höhe a vorgesehen, die von 5 m bis 50 m, vorteilhaft von 10 m bis 30 m, insbesondere von 10 m bis 15 m liegt. Die Höhe a ist vorteilhaft für alle Segmente gleich.

Wie die Figuren 3 und 4 auch zeigen, ist am oberen Bereich des Sockels 2 eine Plattform 20 angeordnet. Eine weitere Plattform 21 befindet sich unterhalb des Stoßbereichs 18 zwischen dem ersten Segment 7 und dem zweiten Segment 8. Vorteilhaft ist jeweils am Stoßbereich zwischen zwei Segmenten eine Plattform angeordnet.

Das unterste Segment 7 ist mit dem darüber liegenden Segment 8 am Stoßbereich 18 verbunden. Am Stoßbereich 18 greifen die Holzplatten 36 des ersten Segments 7 in die Holzplatten 36 des darüber liegenden zweiten Segments 8 ein. Die Stirnseite 23 des ersten, unteren Segments 7 liegt dadurch oberhalb der Stirnseite 24 des zweiten, darüber liegenden Segments 8.

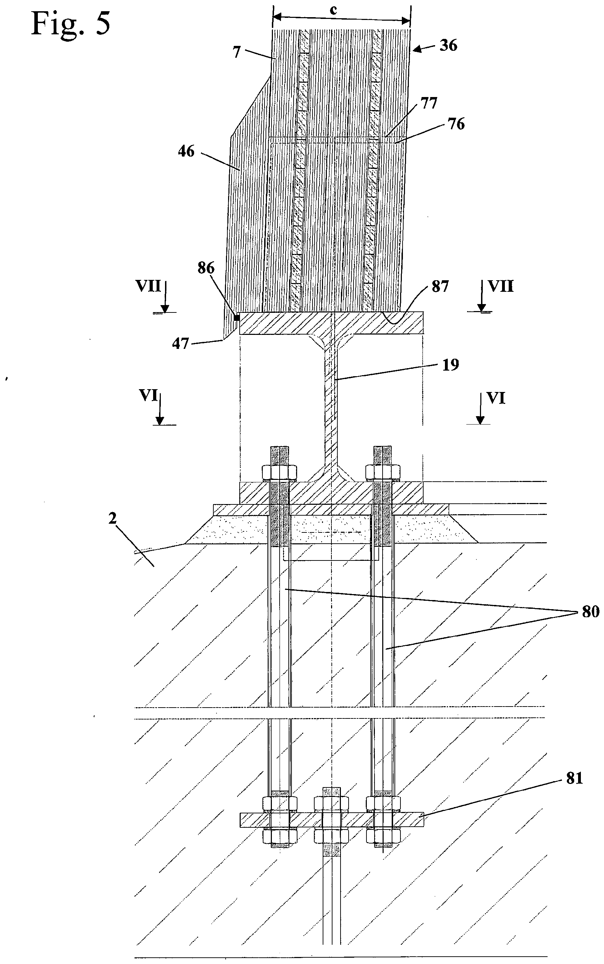

Fig. 5 zeigt die Anbindung der Holzplatten 36 des unteren Segments 7 auf dem Anschlusselement 19. Das Anschlusselement 19 ist im Ausführungsbeispiel als Doppel-T-Träger aus Stahl ausgeführt. Auch eine andere Gestaltung des Anschlusselements 19 kann jedoch vorteilhaft sein. Das Anschlusselement 19 ist im Ausführungsbeispiel über zwei Ankerbolzen 80, die in eine gemeinsame Ankerplatte 81 eingeschraubt und im Beton des Sockels 2 vergossen sind, am Sockel 2 fixiert. Wie Fig. 5 auch zeigt, besitzen die Holzplatten 36 eine Dicke c. Die Dicke c kann beispielsweise etwa 15 cm bis etwa 40 cm betragen. Im Ausführungsbeispiel ist eine Dicke c vorgesehen, die zwischen 20 cm und 33 cm liegt. Wie Fig. 5 auch zeigt, besitzt die Holzplatte 36 einen abgesperrten Querschnittsaufbau, der im Folgenden noch näher erläutert wird.

An der Außenseite der Holzplatte 36 ist eine Abdeckung 46 angeordnet, die als umlaufende Leiste ausgebildet ist und an ihrer nach oben weisenden Seite abgeschrägt ist. Die Abdeckung 46 übergreift den oberen Flansch des Anschlusselements 19 und besitzt an ihrer unten liegenden Seite eine außen liegende Abtropfkante 47. Radial innerhalb der Abtropfkante 47 ist eine Dichtung 86 zwischen dem Anschlusselement 19 und der Abdeckung 46 vorgesehen. Die Dichtung 86 verhindert das Eindringen von Feuchtigkeit zwischen Holzplatte 36 und Anschlusselement 19. Wie Fig. 5 schematisch zeigt, besitzt die Holzplatte 36 an ihrer auf dem Anschlusselement aufliegenden Unterseite 87 einen Schlitz 77, der sich über die gesamte Dicke c erstreckt. In den Schlitz 77 ragen Bleche 76, wie im Folgenden noch näher erläutert wird.

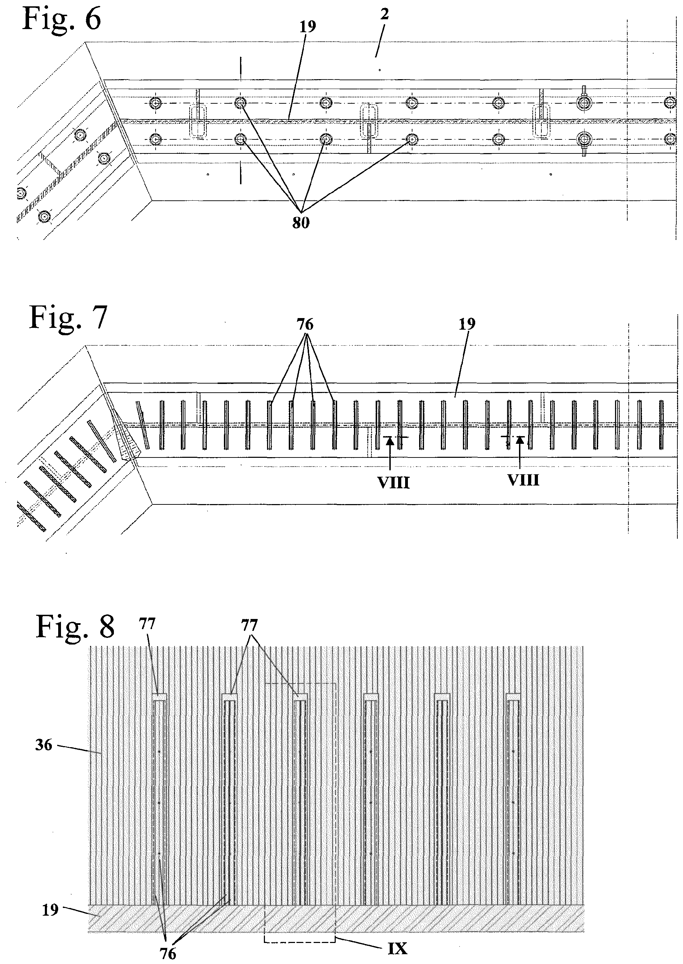

Fig. 6 zeigt die Anordnung des Anschlusselements 19 auf dem Sockel 2 und die Befestigung des Anschlusselements 19 über die Ankerbolzen 80. Es ist eine Vielzahl von Ankerbolzen 80 in gleichmäßigem Abstand zueinander vorgesehen.

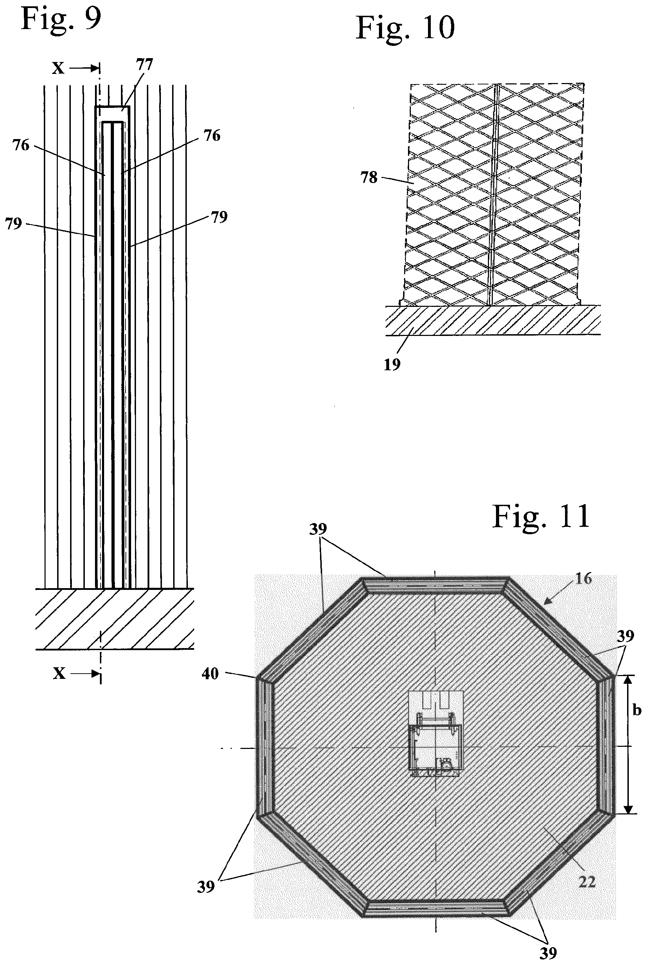

Wie Fig. 7 zeigt, sind an der Oberseite des Anschlusselements 19 eine Vielzahl von Blechen 76 angeordnet, die sich jeweils senkrecht zur Längsrichtung des Anschlusselements 19 erstrecken. Die Bleche 76 sind jeweils paarweise miteinander verbunden, wie Fig. 9 zeigt. Die Paare von Blechen 76 sind in gleichmäßigem Abstand zueinander angeordnet. Im Ausführungsbeispiel beträgt der Abstand zwischen benachbarten Blechpaaren etwa von 5 cm bis 20 cm.

Wie Fig. 8 zeigt, ragen die Bleche 76 in Schlitze 77 der Holzplatte 36. Zwischen den Außenseiten der Bleche 76 und Seitenwänden 79 des Schlitzes 77 ist ein Spalt gebildet, der mit Klebstoff erfüllt ist. Der Klebstoff ist vorteilhaft ein Epoxidharz. Um eine bessere Haftung des Klebstoffs an den Blechen 76 zu erreichen, ist die den Seitenwänden 79 zugewandte Flachseite 78 der Bleche 76 jeweils mit einer strukturierten Oberfläche versehen, wie Fig. 10 zeigt. Die Strukturierung kann dabei geeignet gewählt sein und dient dazu, eine gute mechanische Verbindung zwischen den Blechen 76 und dem Klebstoff herzustellen.

Fig. 11 zeigt einen Schnitt durch das oberste Segment 16. Das oberste Segment 16 besitzt wie auch die weiteren nicht im Schnitt gezeigten Segmente 8 bis 15 einen achteckigen Querschnitt. Das oberste Segment 16 ist aus Holzplatten 39 aufgebaut, die eine deutlich geringere Breite b besitzen als die Holzplatten 36 des ersten, untersten Segments 7. Die Breite b der Holzplatten 39 des obersten Segments 16 kann beispielsweise ein Viertel bis die Hälfte der Breite b der Holzplatten 36 des untersten Segments 7 betragen.

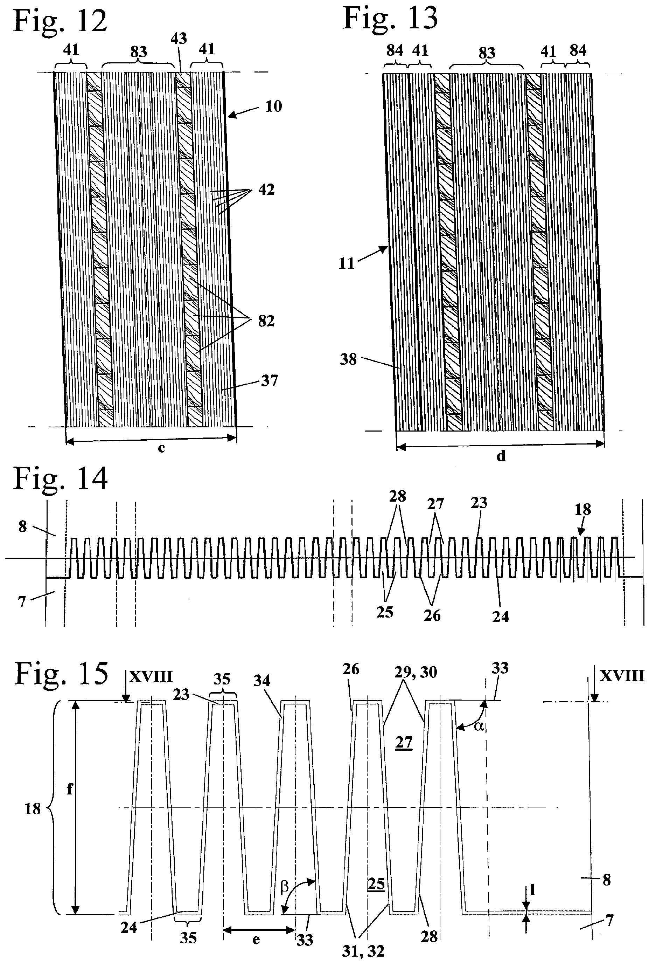

Fig. 12 zeigt einen Schnitt durch eine Holzplatte 37 des vierten Segments 10. Einen entsprechenden Aufbau besitzen auch die Holzplatten der darunterliegenden Segmente 7, 8 und 9. Die Holzplatten 37 besitzen einen mittleren Furnierbereich 83, der aus einer Vielzahl von Furnierlagen mit in Längsrichtung der Holzplatten 37, also etwa vertikal verlaufender Faserrichtung, aufgebaut ist. An der Außenseite besitzt die Holzplatte 37 sowohl innen als auch außen einen Furnierbereich 41, der ebenfalls aus Furnierschichten 42 mit in Längsrichtung der Holzplatte 37 verlaufender Faserrichtung aufgebaut ist. Die Dicke der Furnierschichten beträgt dabei vorteilhaft von 2 mm bis 5 mm, insbesondere von 3 mm bis 4 mm. Zwischen dem mittleren Furnierbereich 83 und den außen liegenden Furnierbereichen 41 ist jeweils eine Sperrschicht 43 angeordnet, die aus Holzbrettern 82 mit etwa horizontal verlaufender Längsrichtung aufgebaut ist. Dadurch ergibt sich ein gesperrter Querschnittsaufbau der Holzplatte 37. Dabei ist die Gesamtdicke aller Lagen mit in Längsrichtung der Holzplatte 37 verlaufender Faserrichtung vorteilhaft größer als die Dicke der in Querrichtung, also horizontal oder in Umfangsrichtung verlaufender Faserrichtung. Die Holzplatten 36 bis 39 sind in den Furnierbereichen vorteilhaft aus Furnierschichtholz aufgebaut, dessen Furnierdicke 2 mm bis 4 mm, vorteilhaft 3 mm bis 3,5 mm, beträgt. Anstatt der Furnierbereiche 41, 83 können auch aus Holzbrettern aufgebaute Bereiche vorgesehen sein. Anstatt der Sperrschichten 43 aus Holzbrettern können auch Sperrschichten aus einer Vielzahl von Furnierlagen vorgesehen sein.

Um eine hohe Stabilität des Turms 3 zu erreichen, ist vorgesehen, im oberen Bereich des Turms 3 Holzplatten 38 mit größerer Dicke d vorzusehen. Fig. 13 zeigt einen Schnitt durch das auf dem Segment 10 angeordnete Segment 11, das aus Holzplatten 38 aufgebaut ist. Die Holzplatten 38 besitzen eine Dicke d, die größer als die Dicke c ist. Im Ausführungsbeispiel beträgt die Dicke d zwischen 25 cm und 33 cm und die Dicke a zwischen 20 cm und 25 cm. Die Dicke d kann dabei vorteilhaft etwa 2 cm bis 10 cm größer als die Dicke c sein. Die Holzplatten 38 besitzen an ihren Außenseiten zusätzlich jeweils einen äußeren Furnierbereich 84, dessen Dicke und Aufbau im Ausführungsbeispiel dem des Furnierbereichs 41 entspricht. Auch ein anderer Aufbau der Holzplatten 37 und 38 kann jedoch vorteilhaft sein. Auch die über dem Segment 10 angeordneten Segmente 11 bis 16 sind aus Holzplatten 38, 39 aufgebaut, die eine Dicke d besitzen.

Die Holzplatten 36, 37, 38, 39 sind vorteilhaft aus Brettsperrholz, Brettschichtholz und/oder Furnierschichtholz aufgebaut und besitzen einen abgesperrten Querschnittsaufbau. Auch ein anderer Aufbau als der gezeigte kann dabei vorteilhaft sein.

Die Figuren 14 und 15 zeigen die Gestaltung des Stoßbereichs 18 im Einzelnen. Als Stoßbereich 18 wird dabei ein horizontal verlaufender Turmabschnitt verstanden, in dem die Stirnseiten 23 und 24 der benachbarten Segmente 7 und 8 liegen. Die Stirnseiten 23 und 24 müssen dabei nicht horizontal verlaufen, sondern können jede beliebige Form aufweisen, liegen jedoch innerhalb des durch gedachte horizontale Linien begrenzten Stoßbereichs 18. Die Stirnseite 23 des untersten Segments 7 weist eine Vielzahl von Erhöhungen 25 und Vertiefungen 26 auf. Entsprechende Erhöhungen 27 und Vertiefungen 28 sind an der unteren Stirnseite 24 des Segments 8 vorgesehen. Die Erhöhungen und Vertiefungen greifen zahnartig ineinander. Im Ausführungsbeispiel bilden die Erhöhungen 25, 27 und Vertiefungen 26, 28 eine ineinandergreifende, gleichmäßige Verzahnung. Auch eine ungleichmäßige Gestaltung der Erhöhungen und Vertiefungen mit sich ändernden Höhen und/oder Abständen und/oder Formen kann jedoch zweckmäßig sein. Der Stoßbereich 18 ist vorteilhaft als Generalkeilzinkenstoß aufgebaut, also mit gleichmäßiger Verzinkung, die mit Klebstoff ausgepresst ist.

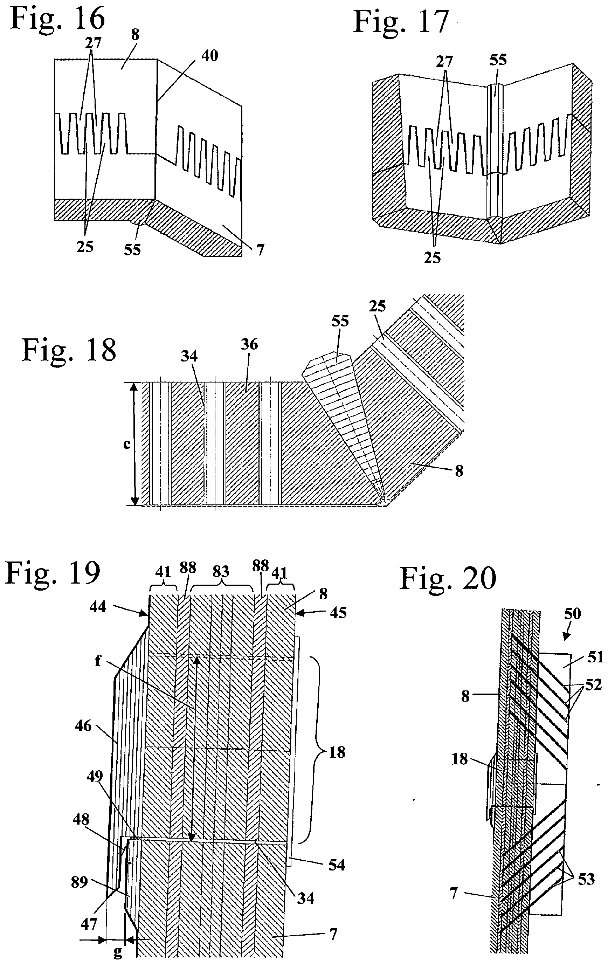

Fig. 15 zeigt die Gestaltung des Stoßbereichs 18 im Einzelnen. Der Stoßbereich 18 besitzt eine in Plattenlängsrichtung, also etwa vertikal gemessene Höhe f. Die Höhe f beträgt vorteilhaft mindestens 5 cm. Um eine gute Verzahnung zu erreichen, beträgt die Höhe f vorteilhaft mindestens 10 cm, insbesondere mindestens 15 cm. Die Höhe f des Stoßbereichs 18 ist vorteilhaft kleiner als 2,0 m. Die Höhe f des Stoßbereichs 18 ist vorteilhaft kleiner als 1,0 m, insbesondere kleiner als 0,5 m. Im Ausführungsbeispiel beträgt die Höhe f des Stoßbereichs 18 etwa 25 cm bis 35 cm. Im Ausführungsbeispiel entspricht die Höhe f der Höhe der Verzahnung jedes Segments 7 bis 16. Die Vertiefungen 26 und 28 sind im Ausführungsbeispiel als keilförmige Schlitze hergestellt, die sich - wie Fig. 18 zeigt - über die gesamte Dicke c der Holzplatten 36 erstrecken. Es kann jedoch auch vorteilhaft sein, dass sich die Erhöhungen 25, 27 und die Vertiefungen 26, 28 nur über einen Teil der Dicke c erstrecken, oder dass sich die Form der Erhöhungen 25, 27 und Vertiefungen 26, 28 über die Dicke c der Holzplatten 36 ändert.

Die Vertiefungen 26, 28 und die Erhöhungen 25, 27 besitzen Seitenwände 29, 30, 31, 32, die gegenüber einer Horizontalen 33 in Umfangsrichtung des Turms 3 geneigt sind. Die Seitenwände 29 der Erhöhungen 27, die den Seitenwänden 30 der Vertiefungen 29 entsprechen, sind gegenüber der Horizontalen 33 um einen Winkel α geneigt. Die Seitenwände 31 der Erhöhungen 27, die den Seitenwänden 32 der Vertiefungen 28 entsprechen, sind gegenüber der Horizontalen 33 um einen Winkel β geneigt. Die Winkel α, β sind vorteilhaft etwas geringer als 90°. Vorteilhaft betragen die Winkel α, β von 70° bis 89,5°, insbesondere von 80° bis 89°. Die Winkel α, β sind vorteilhaft gleich. Auch unterschiedliche Winkel α, β können jedoch vorteilhaft sein. Im Ausführungsbeispiel sind die Winkel α und β gleich, so dass sich ein Spalt 34 mit konstanter Breite 1 zwischen den Segmenten 7 und 8 ergibt. Der Spalt 34 besitzt jeweils benachbart zu den Stirnseiten 23 und 24 einen horizontalen Abschnitt 35. Die Vertiefungen 26, 28 sind vergleichsweise schmal und tief ausgebildet. Die Summe der Breite einer Erhöhung 25, 27 und einer Vertiefung 26, 28 beträgt im Ausführungsbeispiel 10 cm. Dadurch ergeben sich je Meter horizontal gemessener Umfangslänge des Stoßbereichs 18 zehn Erhöhungen und zehn Vertiefungen jedes Segments 7, 8, die ineinandergreifen. Vorteilhaft ist mindestens eine Vertiefung 26, 28 je Meter horizontal gemessener Umfangslänge des Stoßbereichs 18 vorgesehen. Insbesondere sind mindestens zwei, vorteilhaft mindestens fünf Vertiefungen je Meter horizontal gemessener Umfangslänge des Stoßbereichs 18 vorgesehen.

Im Ausführungsbeispiel sind alle Erhöhungen und Vertiefungen gleich ausgebildet. Es können jedoch auch unterschiedlich ausgebildete Erhöhungen und Vertiefungen vorgesehen sein. Vorteilhaft sind die Erhöhungen und Vertiefungen dann in einem sich wiederholenden Muster angeordnet. Alle Stoßbereiche 18 zwischen aufeinander angeordneten Segmenten 7 bis 16 sind entsprechend zu dem Stoßbereich 18 zwischen den Segmenten 7 und 8 ausgebildet. Aufgrund der zahnartigen Gestaltung der Stirnseiten 23 und 24 wird das jeweils obere Segment 8 bis 16 auf dem darunter liegenden Segment 7 bis 15 bei der Montage zentriert und geführt.

Wie die Figuren 16 und 17 zeigen, sind im Bereich der Stoßkanten 40 keine Erhöhungen 25, 27 und Vertiefungen 26, 28 vorgesehen. An den Stoßkanten 40 ist ein Keil 55 zwischen in Umfangsrichtung benachbarten Holzplatten angeordnet, der im Folgenden noch näher beschrieben wird.

Fig. 19 zeigt die Gestaltung des Stoßbereichs 18 in einem Längsschnitt durch den Turm 3. Wie Fig. 19 zeigt, sind die Segmente 7 und 8 in dem den Stoßbereich 18 bildenden Bereich und den daran angrenzenden Bereichen ohne Sperrschichten 43 aufgebaut. Stattdessen sind zwischen dem mittleren Furnierbereich 83 und den äußeren Furnierbereichen 41 weitere Furnierbereiche 88 angeordnet. Auch in den Furnierbereichen 88 verlaufen die Fasern in Längsrichtung der Holzplatte, also etwa vertikal. Im Stoßbereich 18 und den daran angrenzenden Bereichen sind demnach keine Querlagen vorgesehen. Dadurch ist die über den Stoßbereich 18 übertragbare Zugkraft vergleichsweise hoch. Vorteilhaft erstreckt sich der Bereich, über den keine Querlagen in Holzplatten 36, 37, 38, 39 der Segmente 7 bis 16 angeordnet sind, sowohl oberhalb als auch unterhalb des Stoßbereichs 18 nochmals über eine der Höhe f des Stoßbereichs 18 entsprechende Höhe.

Die Segmente 7 und 8 besitzen jeweils eine außen liegende Außenseite 44 sowie eine innen liegende Innenseite 45. An der Außenseite 44 ist eine den Stoßbereich 18 vollständig überdeckende Abdeckung 46 angeordnet. Die Abdeckung 46 ist am unteren Bereich des obenliegenden Segments 8 angeordnet und überragt das darunterliegende Segment 7 an seiner Außenseite 44. An ihrer Oberseite ist die Abdeckung 46 abgeschrägt ausgebildet. An ihrer Unterseite ist eine Abtropfkante 47 vorgesehen, die im Ausführungsbeispiel an der außen liegenden Kante der Abdeckung 46 angeordnet ist, und die den untersten Bereich der Abdeckung 46 bildet. Die Abtropfkante 47 ist tiefer angeordnet als der Stoßbereich 18. Die Abtropfkante 47 besitzt zum unteren Segment 7 einen senkrecht gemessenen Abstand g. Der Abstand g beträgt vorteilhaft mindestens 1 cm, insbesondere zwischen 1 cm und 5 cm. Der Abstand g ist dabei zu einer an der Außenseite 44 des unteren Segments 7 angeordneten Leiste 89 gemessen. In dem von der Abdeckung 46 übergriffenen Bereich des unteren Segments 7 sind Dichtelemente 48 und 49 vorgesehen. Ein erstes Dichtelement 48 ist im Ausführungsbeispiel als gekantetes Blech ausgebildet und kann vorteilhaft an der Leiste 89 befestigt sein und sich an einer Innenseite der Abdeckung 46 abstützen. Ein zweites Dichtelement 49 ist zwischen der Oberseite der Leiste 89 und der Abdeckung 46 vorgesehen. Das zweite Dichtelement 49 kann beispielsweise ein Dichtband sein. Die Abtropfkante 47 ist tiefer als die Dichtelemente 48 und 49 angeordnet, so dass ein Eindringen von Wasser oder anderen Flüssigkeiten in den Spalt 34 vermieden ist. Eine zusätzliche nachträgliche Abdichtung des Spalts 34 zwischen aufeinander angeordneten Segmenten 7 und 8 kann dadurch entfallen. Mit dem Aufsetzen des Segments 8 auf das darunterliegende Segment 7 ist der Stoßbereich 18 abgedichtet. Die Stoßbereiche 18 der weiteren Segmente 8 bis 16 sind entsprechend ausgebildet.

Der Spalt 34 wird bei der Herstellung des Turms mit Klebstoff, insbesondere mit Epoxidharz, verpresst. Die Breite 1 des Spalts 34 beträgt dabei von 0,5 mm bis 8 mm. Um ein vollständiges Verfüllen der Spalts 34 zu ermöglichen, ist an der Innenseite 45 des Turms 3 ein den Stoßbereich 18 überdeckendes Abdichtelement, im Ausführungsbeispiel eine Plexiglasscheibe 54, angeordnet. Die Plexiglasscheibe 54 ermöglicht auch eine optische Kontrolle der Füllung des Spalts 34 mit Klebstoff. Um die Lage der Segmente 7 und 8 zueinander während der Herstellung des Turms 3 bis zum vollständigen Aushärten des Klebstoffs zu sichern, ist eine in Fig. 20 gezeigte Lagesicherung 50 vorgesehen. Die Lagesicherung 50 umfasst im Ausführungsbeispiel einen T-Träger 51, der über eine Vielzahl von Schrauben 52 mit dem Segment 8 und eine Vielzahl von Schrauben 53 mit dem Segment 7 verschraubt ist.

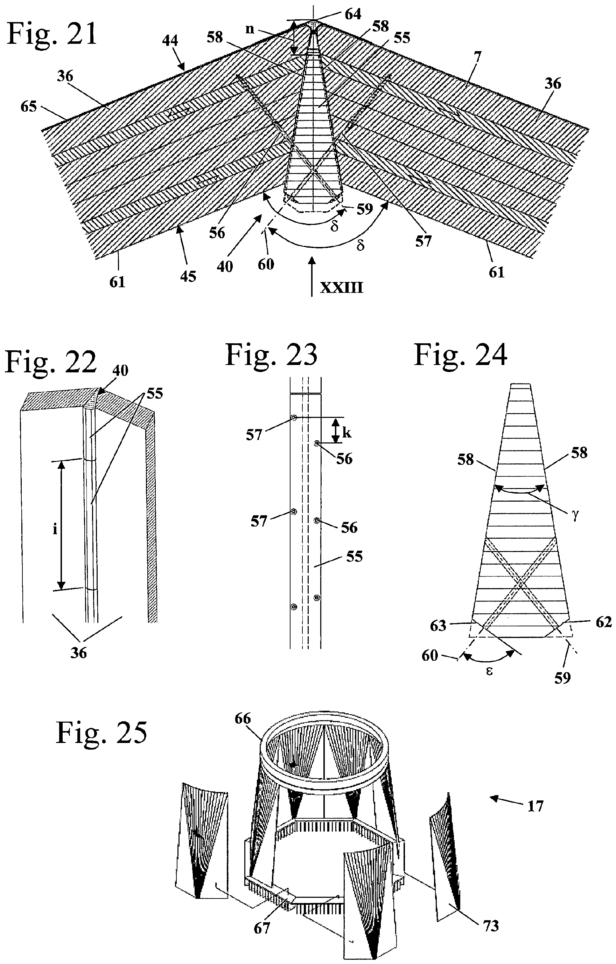

Die Fig. 21 zeigt die Gestaltung eines Keils 55 an der Stoßkante 40 zwischen zwei in Umfangsrichtung benachbarten Holzplatten 36. Die Holzplatten 36 besitzen jeweils eine Außenseite 65, die an der Außenseite 44 des Segments angeordnet ist, sowie eine an der Innenseite 45 des Segments angeordnete Innenseite 61. Der Keil 55 erstreckt sich von der Innenseite 45 in Richtung auf die Außenseite 44 des Segments 7. Der Keil 55 verbreitert sich dabei zur Innenseite 45 des Segments 7 hin. Das Segment 7 besitzt an seiner Außenseite 44 an der vertikalen Stoßkante 40 eine außen liegende Seite 64, zu der der Keil 55 einen Abstand n besitzt. Der Keil 55 ragt demnach nicht bis zur Außenseite 44. Der Keil 55 ist an den Holzplatten 36 mit Schrauben 56 und 57 gehalten. Die Längsachse 60 der Schraube 57 besitzt zur Innenseite 61 der Holzplatte 36, in die die Schraube 57 eingeschraubt ist, einen Winkel δ, der von 40° bis 140° beträgt. Vorteilhaft beträgt der Winkel δ 60° bis 130°, insbesondere 100° bis 120°. Die Längsachse 59 der Schraube 56 verläuft zur Innenseite 61 der Holzplatte 36, in die die Schraube 56 eingeschraubt ist, ebenfalls unter einem Winkel δ, der vorteilhaft dem Winkel δ zwischen der Längsachse 60 und der zugeordneten Innenseite 61 der Holzplatte 36 entspricht. Die Schrauben 56 und 57 überkreuzen sich dabei in einer Draufsicht. Durch diese Anordnung der Schrauben 56 und 57 können die Holzplatten 36 gut an den Keil 55 herangezogen werden, so dass ein geringer Klebspalt zwischen Holzplatten 36 und Keil 55 erreicht werden kann.

Wie Fig. 23 zeigt, sind die Schrauben 56 und 57 mit horizontalem Versatz k zueinander angeordnet. Der Versatz k kann dabei für alle Schrauben 56 und 57 gleich sein. Es kann auch vorgesehen sein, unterschiedliche Abstände zwischen übereinander liegenden Schrauben 57 und übereinander liegenden Schrauben 56 vorzusehen, wobei der Abstand zwischen übereinander liegenden Schrauben 56 jeweils gleich ist und der Abstand zwischen übereinander liegenden Schrauben 57 jeweils gleich ist.

Der Keil 55 besitzt Längsseiten 58, die an den Längsseiten der Holzplatten 36 anliegen. Wie Fig. 24 zeigt, schließen die Längsseiten 58 des Keils 55 einen Winkel γ ein, der vorteilhaft von 10° bis 30°, insbesondere von 15° bis 25° beträgt. Der Winkel γ ist dabei vorteilhaft auf die Anzahl der Ecken des Turmquerschnitts abgestimmt. Bei einer anderen Anzahl von Ecken des Turms können andere Winkelbereiche vorteilhaft sein. Wie Fig. 22 zeigt, besitzt jeder Keil 55 eine Höhe i. Die Höhe i ist deutlich kleiner als die Höhe a eines Segments 7 bis 16 (Fig. 3). Die Höhe i eines Keils 55 kann vorteilhaft 1 m bis 3 m, insbesondere 1,5 m bis 2 m betragen. Dadurch wird die Handhabung der Keile 55 erleichtert, und es ergibt sich ein verbesserter Toleranzausgleich. Im Ausführungsbeispiel sind die Keile 55 mit ihren Stirnseiten aneinander gelegt. Es kann jedoch auch vorteilhaft sein, an den Stirnseiten der Keile 55 eine ineinandergreifende Struktur vorzusehen und/oder die Keile 55 miteinander zu verbinden, insbesondere zu verkleben.

An der Innenseite 45 des Segments besitzt der Keil 55 Längsseiten 62 und 63, die Abschrägungen des Keils 55 bilden. Die Längsseiten 62 und 63 sind so ausgebildet, dass sie mit den Längsachsen 59 und 60 der Schrauben 56 und 57 einen Winkel ε einschließen, der von 85° bis 95° beträgt. Dadurch ist das Einbringen der Bohrungen für die Schrauben 56 und 57 vereinfacht. Gleichzeitig ergibt sich eine gute Zugänglichkeit aufgrund der kreuzweisen Anordnung der Schrauben 56 und 57. Die Schrauben 56 und 57 erstrecken sich dabei von der Innenseite 45 des jeweiligen Segments 7 bis 16 in den Keil 55 und anschließend in die Holzplatte 36.

Der Keil 55 ist zwischen den Holzplatten 36 eingeklebt. Die Schrauben 56 und 57 fixieren die Klebverbindung und stellen gleichzeitig den benötigten Anpressdruck für die Verklebung sicher. Beim Einkleben des Keils werden vorteilhaft die Längsseiten 58 des Keils 55 mit einem Klebstoff bestrichen. Der Klebstoff am Keil 55 ist insbesondere ein fugenfüllender Harzleim. Anschließend wird der Keil 55 in die Stoßkante 40 eingetrieben und der Pressdruck mit den Schrauben 56 und 57 aufgebracht. Vorteilhaft sind alle Stoßkanten 40 aller Segmente 7 bis 16 identisch und wie zum Segment 7 beschrieben ausgebildet.

Bei der Herstellung des Turms wird zunächst das untere Segment 7 hergestellt. Das unterste Segment 7 wird vorteilhaft unmittelbar auf dem Anschlusselement 19 aufgebaut und dort über die Keile 55 geschlossen und auf dem unteren Anschlusselement 19 verklebt. Dabei werden die Bleche 76 in den Schlitzen 77 der Holzplatten 36 verklebt. Anschließend wird das zweite Segment 8 aus Holzplatten 36 als Ringsegment neben dem unteren Segment 7 erstellt. Dabei werden die Holzplatten 36 des Segments 8 zum Ring gestellt und über Keile 55 miteinander verbunden und verklebt. Die Keile 55 werden dabei zum Aufbringen des Pressdrucks über die Schrauben 56 und 57 an den benachbarten Holzplatten 36 befestigt. Die Befestigung und Verklebung der Keile 55 erfolgt nacheinander von unten nach oben.

Anschließend werden die Stoßkanten 40 an ihrer außenliegenden Seite 64 abgedichtet. Dies kann beispielsweise über eine aufgebrachte Leiste und ein flüssiges Dichtmaterial erfolgen. Dann wird das zweite Segment 8 auf das unterste Segment 7 aufgesetzt. Das zweite Segment 8 wird auf dem ersten Segment 7 ausgerichtet, so dass sich die gewünschte Lage und eine definierte Breite 1 des Spalts 34 ergibt. Dabei wird im Spalt 34 zwischen den Segmenten 7 und 8 so unterlegt, dass sich die gewünschte Spaltbreite und Ausrichtung des Segments 8 ergibt. Anschließend wird der Spalt 34 mit Klebstoff verpresst. Die Spaltbreite beträgt dabei 0,5 mm bis 8 mm und kann sowohl über die Spaltlänge als auch über die Breite der Holzplatten 36 bis 39 variieren. Eine Abdichtung des Stoßbereichs 18 erfolgt nur über die Abdeckung 46 und bereits an den Segmente 7 und 8 montierte Dichtelemente 48 und 49. Eine Abdichtung des Stoßbereichs 18 oder der Stoßkante 40 nach dem Aufsetzen eines Segments 8 bis 16 auf ein darunterliegendes Segment 7 bis 15 ist nicht vorgesehen.

Anschließend wird das folgende Segment 9 bis 16 zunächst als Ring hergestellt und anschließend aufgesetzt, ausgerichtet und verklebt. Es kann auch vorgesehen sein, zunächst mehrere oder alle Segmente 7 bis 16 aufeinander anzuordnen, bevor die Spalte 34 mit Klebstoff verpresst werden.

Die Holzplatten 36 tragen an ihrer Außenseite 65 bereits vor der Herstellung der Segmente 7 bis 16 eine Beschichtung. Die Beschichtung kann beispielsweise eine Folie sein, die ein Glasfaservlies und Polyurethan enthält. Die Beschichtung besteht dabei vorteilhaft aus einem Material, das dem bei einer vlieskaschierten Flüssigbeschichtung verwendeten Material entspricht. Die Beschichtung wird vorteilhaft bereits bei der Herstellung der Holzplatte 36 bis 38 und vor dem Transport zum Turm 3 aufgebracht, insbesondere maschinell, beispielsweise in einem Vakuumpressverfahren oder mittels einer Presse. Durch die Aufbringung der Beschichtung bei der Herstellung der Holzplatte 36 kann ein definierter Pressdruck erreicht werden. Die Beschichtung kann auch eine Flüssigbeschichtung, insbesondere eine vlieskaschierte Flüssigbeschichtung sein. Auch die Flüssigbeschichtung wird vorteilhaft werkseitig aufgebracht, um definierte Eigenschaften der Beschichtung zu erreichen.

Fig. 25 zeigt die Gestaltung des Turmkopfs 17. Der Turmkopf 17 besitzt einen oberen Anschlussflansch 66, der rund ausgebildet ist sowie einen unteren Anschlussflansch 67, der eine mehreckige, im Ausführungsbeispiel eine achteckige Gestalt besitzt. Die Form des unteren Anschlussflanschs 67 ist auf die Form des oberen Segments 16 abgestimmt. Zwischen dem oberen Anschlussflansch 66 und dem unteren Anschlussflansch 67 erstrecken sich Metallbleche 73. Im Ausführungsbeispiel sind acht Metallbleche 73 vorgesehen.

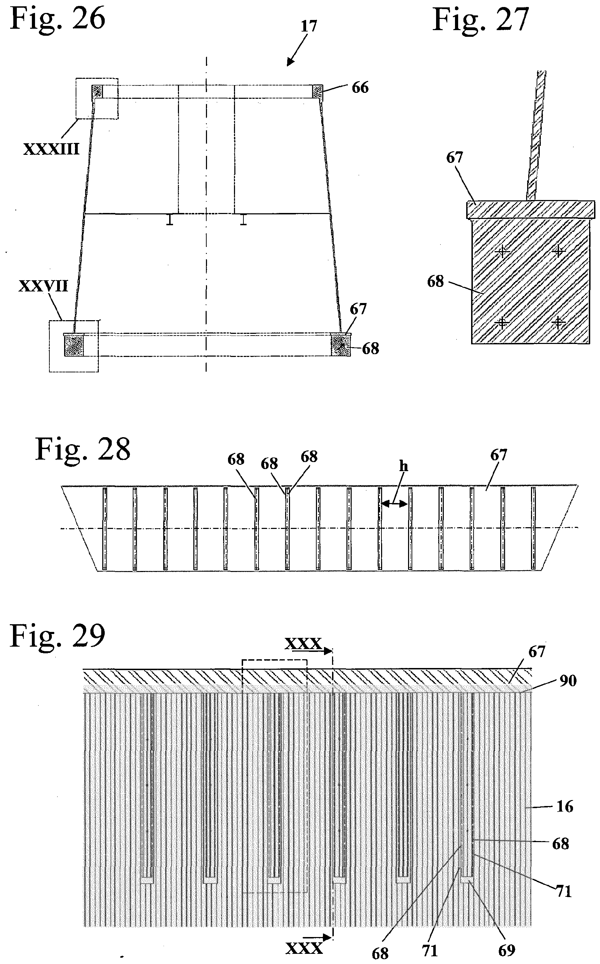

Wie die Figuren 26 und 27 zeigen, sind am unteren Anschlussflansch 67 eine Vielzahl von Blechen 68 festgelegt. Die Bleche 68 sind entsprechend zu den Blechen 76 am Anschlusselement 19 am Anschlussflansch 67 angeordnet und ausgebildet. Wie Fig. 28 zeigt, sind jeweils zwei Bleche 68 zusammengefügt. Die Blechpaare sind in gleichmäßigem Abstand zueinander am unteren Anschlussflansch 67 festgelegt. Der Abstand h zwischen benachbarten Blechpaaren kann vorteilhaft von 5 cm bis 20 cm betragen. Im Ausführungsbeispiel ist ein Abstand h von 10 cm vorgesehen.

Wie Fig. 29 zeigt, weist das oberste Segment 16 an seiner Oberseite 90 eine Vielzahl von Schlitzen 69 auf, in die die paarweise angeordneten Bleche 68 ragen. Jeder Schlitz 69 besitzt zwei Seitenwände 71, die den Außenseiten der Bleche 68 zugewandt sind. An ihren den Seitenwänden 71 zugewandten Flachseiten 70 weisen die Bleche 68 eine strukturierte Oberfläche auf. Im Ausführungsbeispiel ist eine durch rautenförmige Erhöhungen gebildete Struktur vorgesehen. Auch eine andere Struktur kann zweckmäßig sein. Die Bleche 68 sind in den Schlitzen 69 des oberen Segments 16 verklebt. Aufgrund der Struktur der Flachseiten 70 der Bleche 68 ergibt sich eine gute Verbindung zwischen Klebstoff und den Blechen 68.

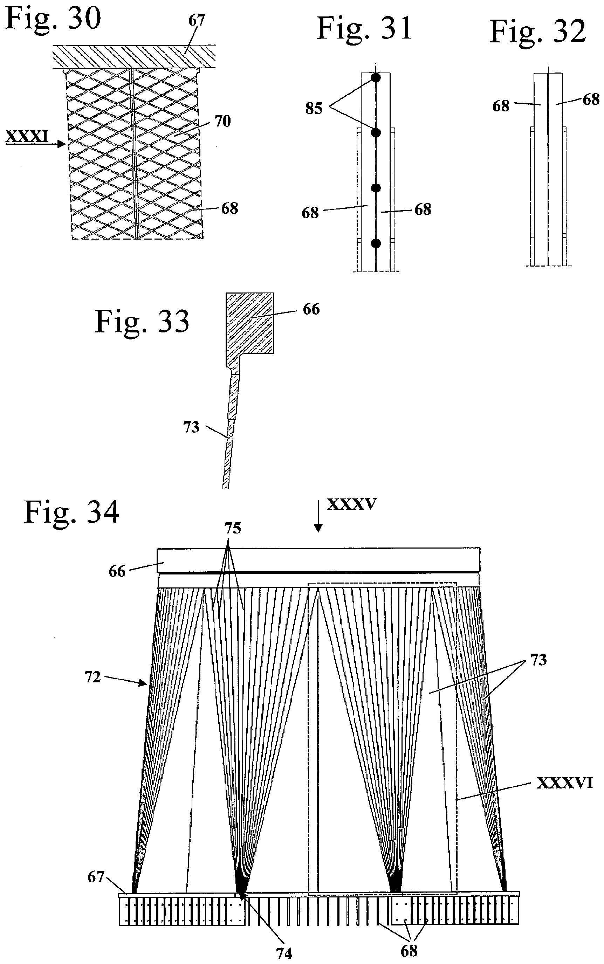

Wie Fig. 31 zeigt, sind jeweils zwei benachbarte Bleche 68 an ihren in Hochrichtung des Turms 3 verlaufenden Rändern aufeinander zu gebogen. An ihren Rändern können die Bleche 68 durch Schweißpunkte 85 miteinander verbunden sein, wie Fig. 31 zeigt. Auch eine Verbindung der Bleche 68 ohne Schweißpunkte 85, beispielsweise über eine durchgehende Schweißnaht oder separate Verbindungsmittel kann vorgesehen sein, wie Fig. 32 zeigt.

Fig. 33 zeigt die Verbindung eines Metallblechs 73 mit dem oberen Anschlussflansch 66. Die Verbindung kann über übliche Verbindungsmittel wie Schrauben oder dgl. oder über eine Schweißverbindung oder dgl. erfolgen.

Die Metallbleche 73 bilden einen Verbindungsabschnitt 72, der den unteren Anschlussflansch 67 mit dem oberen Anschlussflansch 66 verbindet. Dies ist in Fig. 34 gezeigt. Wie die Figuren 34, 35 und 36 zeigen, besitzt jedes Metallblech 73 eine Vielzahl von Biegekanten 75. Die Biegekanten 75 erstrecken sich von einer Ecke 74 des unteren Anschlussflanschs 67 ausgehend fächerförmig zum oberen Anschlussflansch 66. Die Ecke 74 ist dabei jeweils mittig an der Unterkante der Metallbleche 73 vorgesehen. Am oberen Anschlussflansch 66 besitzen benachbarte Biegekanten 75 jeweils den gleichen Abstand zueinander. Über die Biegekanten 75 kann auf einfache Weise ein exakter Übergang vom achteckigen Querschnitt des unteren Anschlussflanschs 67 zum runden Querschnitt des oberen Anschlussflanschs 66 erreicht werden.

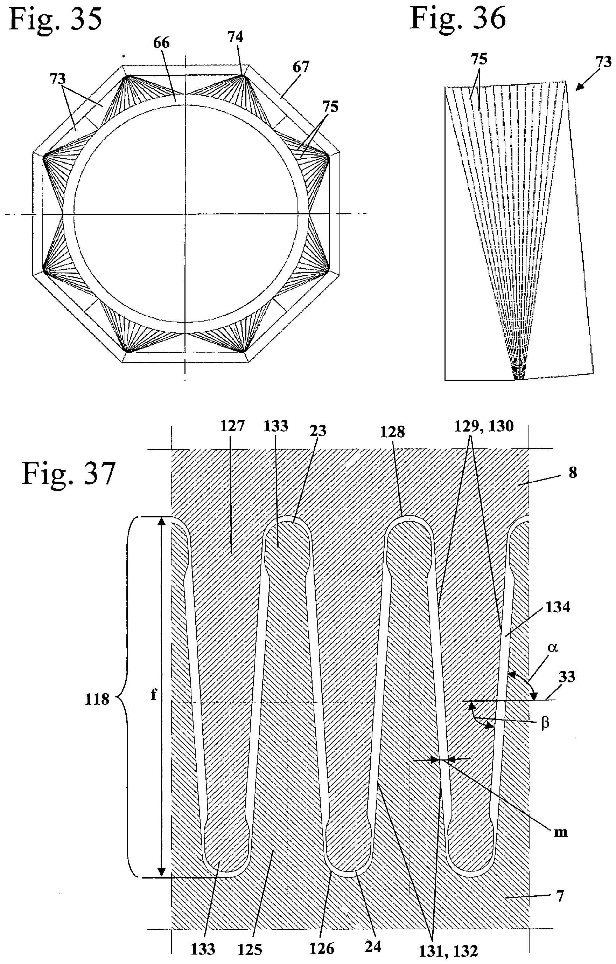

Fig. 37 zeigt ein Ausführungsbeispiel für die Gestaltung eines Stoßbereichs 118 zwischen zwei Segmenten 7 und 8. Entsprechende Stoßbereiche 118 können zwischen den Segmenten 8 bis 16 vorgesehen sein. Das untere Segment 7 besitzt an seiner Stirnseite 23 Vertiefungen 126. Zwischen den Vertiefungen 126 sind jeweils Erhöhungen 125 gebildet. An dem oberen Bereich jeder Erhöhung 125 ist eine Verdickung 133 vorgesehen. Der Nutgrund der nutförmigen Vertiefungen 126 und die Verdickungen 133 sind mit rundem Querschnitt ausgebildet und können beispielsweise mit einem Fräswerkzeug wie einem Fingerfräser hergestellt sein. An der Stirnseite 24 des oberen Segments 8 sind Vertiefungen 128 vorgesehen, zwischen denen Erhöhungen 127 gebildet sind. Die Erhöhungen 127 und Vertiefungen 128 sind identisch zu den Erhöhungen 125 und Vertiefungen 126 ausgebildet. Die Erhöhungen 127 besitzen in ihrem der Stirnseite 24 zugewandten Bereich jeweils eine Verdickung 133. Der Bereich der Verdickungen 133 und der im Einbauzustand oben angeordnete Nutgrund der als Nuten ausgebildeten Vertiefungen 128 sind jeweils mit rundem Querschnitt ausgeführt. Die Erhöhungen 125 besitzen Seitenwände 131, die Seitenwänden 132 der Vertiefungen 126 entsprechen. Die Seitenwände 131, 132 verlaufen zu einer Horizontalen 33 in einem Winkel α, der vorteilhaft dem in Fig. 15 gezeigten Winkel α entspricht. Die Seitenwände 129 der Erhöhungen 127, die Seitenwänden 130 der Vertiefungen 128 entsprechen, verlaufen zur Horizontalen 33 in einem Winkel β, der dem in Fig. 15 gezeigten Winkel β entsprechen kann. Zwischen den Seitenwänden 129, 130 und 131, 132 ist ein Spalt 134 gebildet, der eine Breite m besitzt. Die Breite m ist dabei in dem Bereich zwischen den Verdickungen 133 größer als im Bereich der Verdickungen 133. Die Breite m beträgt jedoch an jeder Stelle zwischen 0,5 mm und 8 mm.

Auch andere Querschnittsformen für einen Spalt 34, 134 können vorteilhaft sein. Auch einzelne Erhöhungen wie Noppen oder dgl. auf einer Erhöhung oder Vertiefung können vorteilhaft sein, um einen definierten Abstand zwischen den Segmenten 7 und 8 und dadurch eine definierte Breite m des Spalts 134 einstellen zu können. Es kann vorgesehen sein, dass zur Entlüftung des Spalts 34, 134 zusätzliche Nuten oder Vertiefungen im Stoßbereich 18, 118 vorgesehen sind.

## Patentansprüche

1. Turm für eine Windkraftanlage, wobei der Turm (3) mindestens ein ringförmiges Segment (7 bis 16) aus Holz besitzt, das einen mehreckigen Querschnitt besitzt, wobei das Segment (7 bis 16) aus an ihren vertikal verlaufenden Kanten miteinander verbundenen Holzplatten (36, 37, 38, 39) aufgebaut ist,
**dadurch gekennzeichnet, dass** die Holzplatten (36, 37, 38, 39) an ihren Stoßkanten (40) über zwischen den Holzplatten (36, 37, 38, 39) angeordnete, vertikal verlaufende Keile (55) verbunden sind.

2. Turm nach Anspruch 1,
**dadurch gekennzeichnet, dass** der Keil (55) an der Stoßkante (40) mit beiden angrenzenden Holzplatten (36, 37, 38, 39) verklebt ist.

3. Turm nach Anspruch 1 oder 2,
**dadurch gekennzeichnet, dass** der Keil (55) sich in einem horizontalen Querschnitt zur Innenseite (45) des Segments (7 bis 16) hin verbreitert.

4. Turm nach einem der Ansprüche 1 bis 3,
**dadurch gekennzeichnet, dass** der Winkel (γ) zwischen den Längsseiten (58) des Keils (55), die an den angrenzenden Holzplatten (36, 37, 38, 39) anliegen, von 10° bis 30° beträgt.

5. Turm nach einem der Ansprüche 1 bis 4,
**dadurch gekennzeichnet, dass** der Keil (55) über mindestens eine Schraube (56, 57) mit mindestens einer an den Keil (55) angrenzenden Holzplatte (36, 37, 38, 39) verbunden ist.

6. Turm nach Anspruch 5,
**dadurch gekennzeichnet, dass** die Schraube (56, 57) sich von der Innenseite (45) des Segments (7 bis 16) in den Keil (55) und die Holzplatte (36, 37, 38, 39) erstreckt.

7. Turm nach Anspruch 5 oder 6,
**dadurch gekennzeichnet, dass** die Längsachse (59, 60) der Schraube (56, 57) zur Innenseite (61) der Holzplatte (36, 37, 38, 39), in die die Schraube (56, 57) eingeschraubt ist, in einem Winkel (δ) verläuft, der von 40° bis 140° beträgt.

8. Turm nach einem der Ansprüche 5 bis 7,
**dadurch gekennzeichnet, dass** die Schraube (56, 57) durch eine ins Turminnere ragende Längsseite (62, 63) des Keils (55) verläuft, die mit der Längsachse (59, 60) der Schraube (56, 57) einen Winkel (ε) von 85° bis 95° einschließt.

9. Turm nach einem der Ansprüche 1 bis 8,
**dadurch gekennzeichnet, dass** der Keil (55) zur außenliegenden Seite (64) der Stoßkante (40) einen Abstand (n) besitzt.

10. Turm nach einem der Ansprüche 1 bis 9,
**dadurch gekennzeichnet, dass** die Holzplatten (36, 37, 38, 39) des Turms (3) an ihrer Außenseite (65) eine Beschichtung aufweisen.

11. Turm nach einem der Ansprüche 1 bis 10,
**dadurch gekennzeichnet, dass** die vertikal verlaufenden Stoßkanten (40) an der Turmaußenseite abgedichtet sind.

12. Verfahren zur Herstellung eines Turms nach einem der Ansprüche 1 bis 11, **dadurch gekennzeichnet, dass** die Holzplatten (36, 37, 38, 39) mit einer Beschichtung versehen werden, und dass die Holzplatten (36, 37, 38, 39) in einem späteren Verfahrensschritt zu ringförmigen Segmenten (7 bis 16) verbunden werden, wobei vertikal verlaufende Keile (55) zwischen in Umfangsrichtung benachbarten Holzplatten (36, 37, 38, 39) angeordnet und mit den Holzplatten (36, 37, 38, 39) verklebt werden.

13. Verfahren nach Anspruch 12,
**dadurch gekennzeichnet, dass** die Beschichtung als Folie mit definiertem Pressdruck, insbesondere im Vakuumverfahren, aufgeklebt wird.

14. Verfahren nach Anspruch 12 oder 13,
**dadurch gekennzeichnet, dass** die Keile (55) über Schrauben (56, 57) an den benachbarten Holzplatten (36, 37, 38, 39) befestigt werden.

## Claims

1. Tower for a wind power plant, wherein the tower (3) comprises at least one annular segment (7 to 16) made of wood and having a polygonal cross-section, wherein the segment (7 to 16) is made up from wooden panels (36, 37, 38, 39) joined to one another at their vertically oriented edges,
**characterised in that** the wooden panels (36, 37, 38, 39) are joined at their abutting edges (40) via vertically oriented wedges (55) located between the wooden panels (36, 37, 38, 39).

2. Tower according to claim 1,
**characterised in that** the wedge (55) is bonded to both adjoining wooden panels (36, 37, 38, 39) at the abutting edge (40).

3. Tower according to claim 1 or 2,
**characterised in that** the wedge (55) widens in a horizontal cross-section towards the inside (45) of the segment (7 to 16).

4. Tower according to any of claims 1 to 3,
**characterised in that** the angle (γ) between the longitudinal sides (58) of the wedge (55), which bear against the adjoining wooden panels (36, 37, 38, 39), is 10° to 30°.

5. Tower according to any of claims 1 to 4,
**characterised in that** the wedge (55) is joined to at least one wooden panel (36, 37, 38, 39) adjoining the wedge (55) via at least one screw (56, 57).

6. Tower according to claim 5,
**characterised in that** the screw (56, 57) extends from the inside (45) of the segment (7 to 16) into the wedge (55) and the wooden panel (36, 37, 38, 39).

7. Tower according to claim 5 or 6,
**characterised in that** the longitudinal axis (59, 60) of the screw (56, 57) extends relative to the inside (61) of the wooden panel (36, 37, 38, 39) into which the screw (56, 57) is screwed at an angle (δ) of 40° to 140°.

8. Tower according to any of claims 5 to 7,
**characterised in that** the screw (56, 57) extends through a longitudinal side (62, 62) of the wedge (55), which projects into the tower interior and encloses with the longitudinal axis (59, 60) of the screw (56, 57) an angle (ε) of 85° to 95°.

9. Tower according to any of claims 1 to 8,
**characterised in that** the wedge (55) has a distance (n) from the outward side (64) of the abutting edge (40).

10. Tower according to any of claims 1 to 9,
**characterised in that** the wooden panels (36, 37, 38, 39) of the tower (3) have a coating on the outside (65).

11. Tower according to any of claims 1 to 10,
**characterised in that** the vertically oriented abutting edges (40) are sealed at the outside of the tower.

12. Method for producing a tower according to any of claims 1 to 11,
**characterised in that** the wooden panels (36, 37, 38, 39) are provided with a coating, and **in that** the wooden panels (36, 37, 38, 39) are in a subsequent step of the method joined to form annular segments (7 to 16), wherein vertically oriented wedges (55) are placed between wooden panels (36, 37, 38, 39) adjacent to one another in the circumferential direction and bonded to the wooden panels (36, 37, 38, 39).

13. Method according to claim 12,
**characterised in that** the coating is applied as a film using a defined pressure, in particular in a vacuum process.

14. Method according to claim 12 or 13,
**characterised in that** the wedges (55) are secured to the adjacent wooden panels (36, 37, 38, 39) via screws (56, 57).

## Revendications

1. Mât pour une éolienne, le mât (3) comportant au moins un segment annulaire (7 à 16) en bois qui présente une section transversale polygonale, le segment (7 à 16) se composant de panneaux de bois (36, 37, 38, 39) qui sont reliés entre eux au niveau de leurs bords s'étendant à la verticale,
**caractérisé en ce que** les panneaux de bois (36, 37, 38, 39) sont reliés au niveau de leurs joints (40) par l'intermédiaire de coins (55) qui sont disposés entre lesdits panneaux de bois (36, 37, 38, 39) et qui s'étendent à la verticale.

2. Mât selon la revendication 1,
**caractérisé en ce que** le coin (55) est collé, au niveau du joint (40), aux deux panneaux de bois (36, 37, 38, 39) voisins.

3. Mât selon la revendication 1 ou 2,
**caractérisé en ce que** le coin (55) va en s'élargissant, en section transversale horizontale, vers le côté intérieur (45) du segment (7 à 16).

4. Mât selon l'une des revendications 1 à 3,
**caractérisé en ce que** l'angle (γ) entre les côtés longitudinaux (58) du coin (55) qui sont appliqués contre les panneaux de bois (36, 37, 38, 39) voisins est de 10° à 30°.

5. Mât selon l'une des revendications 1 à 4,
**caractérisé en ce que** le coin (55) est relié par au moins une vis (56, 57) à au moins un panneau de bois (36, 37, 38, 39) voisin du coin (55).

6. Mât selon la revendication 5,
**caractérisé en ce que** la vis (56, 57) entre dans le coin (55) et le panneau de bois (36, 37, 38, 39) à partir du côté intérieur (45) du segment (7 à 16).

7. Mât selon la revendication 5 ou 6,
**caractérisé en ce que** l'axe longitudinal (59, 60) de la vis (56, 57) s'étend, par rapport au côté intérieur (61) du panneau de bois (36, 37, 38, 39) dans lequel la vis (56, 57) est vissée, suivant un angle (δ) qui est de 40° à 140°.

8. Mât selon l'une des revendications 5 à 7,
**caractérisé en ce que** la vis (56, 57) traverse un côté longitudinal (62, 63) du coin (55) qui dépasse à l'intérieur du mât et qui définit avec l'axe longitudinal (59, 60) de ladite vis (56, 57) un angle (ε) de 85° à 95°.

9. Mât selon l'une des revendications 1 à 8,
**caractérisé en ce que** le coin (55) présente par rapport au côté extérieur (64) du joint (40) un écartement (n).

10. Mât selon l'une des revendications 1 à 9,
**caractérisé en ce que** les panneaux de bois (36, 37, 38, 39) du mât (3) présentent sur leur côté extérieur (65) un revêtement.

11. Mât selon l'une des revendications 1 à 10,
**caractérisé en ce que** les joints (40) qui s'étendent à la verticale sont rendus étanches sur le côté extérieur du mât.

12. Procédé pour fabriquer un mât selon l'une des revendications 1 à 11, **caractérisé en ce que** les panneaux de bois (36, 37, 38, 39) sont pourvus d'un revêtement, et **en ce que** les panneaux de bois (36, 37, 38, 39), lors d'une étape de procédé ultérieure, sont reliés en segments annulaires (7 à 16), les coins (55) qui s'étendent à la verticale étant disposés entre les panneaux de bois (36, 37, 38, 39) voisins dans le sens circonférentiel, et étant collés aux panneaux de bois (36, 37, 38, 39).

13. Procédé selon la revendication 12,
**caractérisé en ce que** le revêtement est collé sous la forme d'un film avec une pression définie, en particulier selon un procédé sous vide.

14. Procédé selon la revendication 12 ou 13,
**caractérisé en ce que** les coins (55) sont reliés par des vis (56, 57) aux panneaux de bois (36, 37, 38, 39) voisins.
